# EUROPEAN PATENT APPLICATION

(11) **EP 2 482 532 A1**
(43) Date of publication of application: **01.08.2012**
(21) Application number: 11305079.3
(22) Date of filing: 26.01.2011
(51) Int. Cl.: H04M 3/42

(54) **Enrichment of a communication**

(71) Applicant: Alcatel Lucent, 75007 Paris (FR)
(72) Inventor: Mourot, Patrick, 67400, Illkirch (FR); Wolff, Christophe, 67400, Illkirch (FR); O'Gorman, Lawrence, Madison, NJ 07940 (US)
(74) Representative: Mouney, Jérôme

(57) **Abstract**

For enriching a voice communication between a user owning an enrichment communication device (ECD) and another user owning another communication device (CD) through a telecommunication network (TN), the enrichment communication device (ECD) receiving voice streams transmitted from the other communication device (CD) generates additional information from an analysis of the received voice streams, and synchronizes the additional information with the received voice streams in order to provide in real time to the user a voice communication accompanied with the additional information.

## Description

### FIELD OF THE INVENTION

The present invention relates to a system for adapting and enriching a communication, involving for example an impaired user like a partly deaf user.

### BACKGROUND

In a point-to-point or multi-point communication and particularly in a circuit or packet voice call it is important that the user receiving a communication understands the message that was expressed in the communication. It is particularly true in some circumstances for example:
- When the user does not fully master the speaking language,
- When the user is partly or fully deaf,
- When the user wants to get help or confirmation or additional contextual information when engaged in some conversations, e.g. during an emergency call.

There is a need to automatically assist a user that is not confident with a voice communication.

### SUMMARY

To remedy the problems referred to hereinabove, a method according to the invention for enriching a voice communication between a user owning an enrichment communication device and another user owning another communication device through a telecommunication network, comprises the following steps in the enrichment communication device receiving voice streams transmitted from the other communication device:
generating additional information from an analysis of the received voice streams,
synchronizing the additional information with the received voice streams in order to provide in real time to the user a voice communication accompanied with the additional information.

The invention advantageously provides additional information that helps the user to better understand the conversation relating to the voice communication. Thus, a hearing impaired user will be more confident of the voice communication, in which additional information will benefit clarity of the message of the conversation.

In an embodiment, at least some part of the additional information is generated and provided by a multimedia terminal linked to the enrichment communication device under the command of this latter:

In an embodiment, at least some part of additional information is generated as a function of communication data that are produced by a server in the telecommunication network from an analysis of the voice streams and that are transmitted to the enrichment communication device

In an embodiment, the voice streams are intercepted by the server from the voice communication between the enrichment communication device and the other communication device.

In an embodiment, the voice streams transmitted from the other communication device are received by the enrichment communication device that retransmits them to the application server for the production of the communication data.

In an embodiment, the other communication device generates communication data from an analysis of the voice streams to transmit and transmit the communication data with the voice streams to the enrichment communication device which generates additional information from the received communication data and the received voice streams.

In an embodiment, the additional information is readable information under the form of image data, and/or the additional information is audible information under the form of audio data.

In an embodiment, the additional information is generated as a function of contextual data corresponding to at least a part of the voice streams, giving more explanation about the meaning of said part of the voice streams.

In an embodiment, the contextual data are retrieved from a database by means of ontological rules applied to the concerned part of the voice streams.

In an embodiment, the user having the enrichment communication device receiving the voice streams has a user profile that describes a physical limitation and the enrichment communication device adapts the additional information according to the physical limitation.

A further object of the invention is an enrichment communication device for enriching a voice communication between a user owning the enrichment communication device and another user owning another communication device through a telecommunication network, the enrichment communication device receiving voice streams transmitted from the other communication device and comprising:
means for generating additional information from an analysis of the received voice streams, and
means for synchronizing the additional information with the received voice streams in order to provide in real time to the user a voice communication accompanied with the additional information.

The invention relates further to a computer program adapted to be executed in an enrichment communication device for enriching a voice communication between a user owning an enrichment communication device and another user owning another communication device through a telecommunication network, said program including instructions which, when the program is executed in said device, execute the steps of the method of the invention.

### BRIEF DESCRIPTION OF THE FIGURE

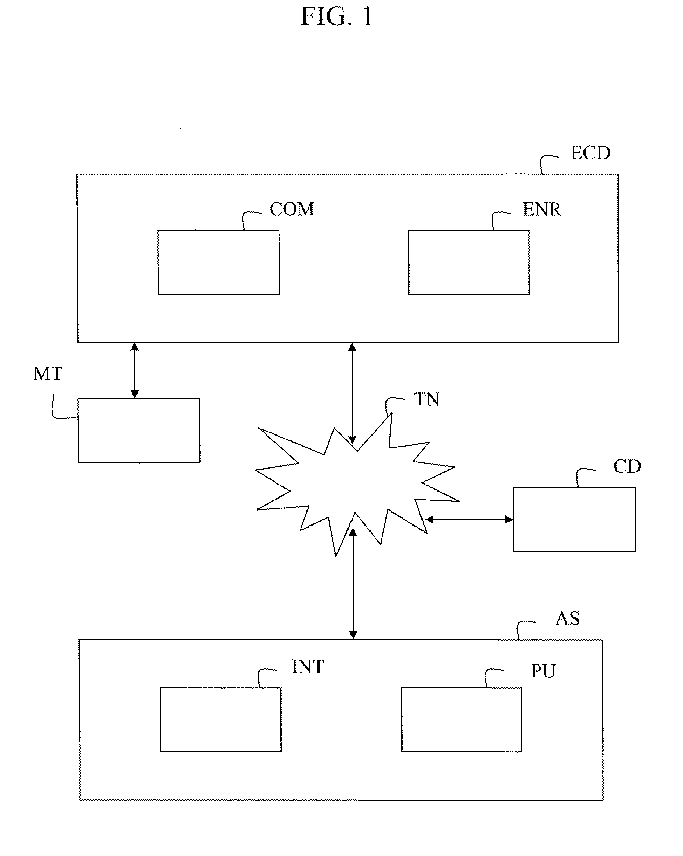

Some embodiments of the present invention are now described, by way of example only, and with reference to the accompanying drawing, in which FIG. 1 is a schematic block-diagram of a communication system including at least two user terminals that are able to communicate between them through a telecommunication network according to an embodiment of the invention.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

Referring to FIG. 1, a communication system comprises an application server AS, an enrichment communication device ECD handling an enriched communication and at least another communication device CD in communication with the enrichment communication device ECD, which are able to communicate between them through a telecommunication network TN.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

The telecommunication network TN can be either a public or private network (in enterprise or at home).

Each communication device can be a mobile terminal or a fixed terminal.

As mobile terminal, the communication device can be a radio communication mobile terminal. For example, the communication device is a mobile phone, or is a communicating Personal Digital Assistant PDA, or an intelligent telephone like SmartPhone.

In another example, the communication device is connected to a base station of a public wireless network of limited scope, such as WLAN (Wireless Local Area Network) or conforming to a standard 802.1x, or medium range according to the protocol WiMAX (World Wide Interoperability Microwave Access).

In another example, the communication device is a cellular mobile radio communication terminal, connected by a channel to a radio access network through a femto base station.

As fixed terminal, the communication device can be a personal computer connected directly via a modem to link of type xDSL (Digital Subscriber Line) or ISDN (Integrated Services Digital Network Services) connected to the packet network PT, or can be an IP phone using a SIP based protocol or a proprietary protocol.

The communication device is considered to own processing means and some sophisticated audio and/or graphics capabilities.

It is considered a voice communication between at least two users, wherein the user interested to have an enriched voice communication may be the calling user or the called user.

The enrichment communication device ECD comprises communication means COM and enrichment means ENR.

The communication means COM are able to communicate with the telecommunication network TN and in particular with another communication device, implementing protocols and coding/decoding algorithms for different kind of communications.

The enrichment means ENR have the functionality to enrich a communication.

For example, the enrichment means ENR are able to make stream extraction, speech analysis, locution recognition, emotion recognition, voice stress detection, and are able to make ontology or context analysis and database search. The information that is added to voice conversation is but not limited to:
- lip movements regenerated thank to voice streams analysis; that helps for example partly deaf or student to decipher,
- fingers of a sign language (signed language) regenerated from the voice stream in order to be displayed on the phone; that helps for example deaf people to understand the communication in real-time,
- intelligent avatars reacting to the voice streams in order to provide visual or accurate additional information to the called user (contextual or behavioral with ontology support),
- augmented reality with more realistic face or finger display.

The information can be also:
- icons, such as smiley faces, indicating tone of voice of the speaker,
- a graph or histogram plot of voice characteristics,
- a color indication, such as red light / green light, of voice characteristics,
- numeric or text to indicate voice characteristics, such as 'mad', 'happy', 'stressed', '9/10 stress scale'.

The additional information is readable information under the form of image data provided via a graphical interface, the image data can contain images, animated images, videos.

Alternatively, the additional information is audible information under the form of audio data provided via speakers, such as an audible tone played intermittently when a received voice exceeds a certain stress level.

The enriching means ENR synchronize the additional information with the received voice streams in order to provide in real time to the user a voice communication accompanied with the additional information. By real time, it is meant approximately at the same time, a set of additional information corresponding to a part of a voice stream is displayed during the providing of this part of voice stream.

The enrichment communication device ECD can be linked to a multimedia terminal MT that owns process means more adapted to provide the additional information. The enrichment communication device and the multimedia terminal can be linked via a wire link or a wireless link. The multimedia terminal MT can be a personal computer, a television, a set-top box, a smart phone, a desktop business phone, or a game console. The enrichment communication device can command the multimedia terminal to generate at least some part of the additional information and to provide them to the user.

For example, the enrichment communication device ECD is a mobile phone linked via a wireless link, Bluetooth type, to a multimedia terminal MT that is a personal computer and the additional information under the form of animated images are displayed by a screen of the personal computer.

The application server AS is a network entity able to communicate with each of the communication device ECD, CD.

For example, the application server AS is a multimedia server performing some multimedia tasks on demand, or is linked to PBX (Private Branch eXchange), or to a switch or to a router.

The application server AS comprises an interface INT and a processing unit PU.

The interface INT comprises means to communicate with the telecommunication network TN and in particular to intercept communications between the communication devices, implementing protocols and coding/decoding algorithms for different kind of communications.

The processing unit PU has similar functionalities as enrichment means ENR of the enrichment communication device ECD. Furthermore, the application server AS can be linked or can include a database containing for example lip schemes, finger signs, avatars movements, real scenes.

In a case where the enrichment communication device ECD does not comprise all the means necessary to enrich the voice communication as wished by the user, or in case where the enrichment communication device ECD command at least in part the outsourcing of the enrichment of the voice communication, the application server AS generates communication data from an analysis of the voice streams and transmit the communication data to the enrichment communication device ECD. In this case, it is considered that the enrichment communication device ECD has at least process means and display means adapted for such kind of enriched communication.

In one embodiment, the voice communication is intercepted by the application server that generates communication data from an analysis of the intercepted voice streams and retransmits the communication data with the voice streams to the enrichment communication device ECD that generates additional information from the received communication data and the received voice streams.

In another embodiment, the voice streams transmitted from the other communication device CD are firstly received by the enrichment communication device ECD that retransmits then the voice streams to the application server AS. The application server AS produces communication data from an analysis of the received voice streams and retransmits the communication data to the enrichment communication device ECD that generates additional information from the received communication data.

The communication device CD of the other user, calling user or called user, may be able to have at least partly the functionalities of the enrichment module of the enrichment communication device ECD. In particular, the communication device CD can help for the enrichment of the communication by adding in voice packets information performed on its side, like locutions, words or transcript.

The other communication device CD generates communication data from an analysis of the voice streams to transmit and transmit the communication data with the voice streams to the enrichment communication device ECD which generates then additional information from the received communication data and the received voice streams.

In particular, the communication device CD can recognize locutions/words in the voice streams, produce some recognizable patterns as communication data and insert these recognizable patterns in the voice streams, for example in RTP (Real-time Transport Protocol) packets. The enrichment communication device ECD handling the enriched communication receives the streams including patterns and can look at the presence of the patterns. The enrichment communication device ECD can perform its own recognition and can double check the semantic corresponding to patterns that were sent, before presenting the additional information to the user.

The communication device CD can also send the transcript of the streams in order for the enrichment communication device ECD to use text as a basis of the translation. These packets can be send in a multi-mime part of the of media packets.

The format of communication data depends on the protocols used by the communication device CD to communicate with the enrichment communication device ECD.

During the analysis of the voice streams, the enrichment communication device ECD, the other communication device CD or the application server AS can determine a context corresponding to at least a part of the voice streams, like a word, a set of words, a name or an expression. The device ECD, CD or the server can then retrieve contextual data from a database by means of ontological rules for example applied to the concerned part of the voice streams. Furthermore, the contextual data can be determined from information linked to the context of the communication, like time and location associated to the communication devices.

In one embodiment, the contextual data give more explanation about the meaning of the concerned part of the voice streams. The contextual data can contain a definition, a set of synonyms, or complementary information about a name or an expression.

In an example, a doctor owning the communication device CD is calling a nurse that owns the enrichment communication device ECD and takes care of a patient M. X in a hospital. During the voice conversation, the doctor orders the nurse to treat patient M. X as usual. The enrichment communication device ECD determines a context corresponding to "M. X" and the expressions "treat" and "as usual" and retrieves contextual data indicating that the doctor means to administrate a list of predefined drugs to M. X. The communication device ECD generates additional information from contextual data and displays additional information, for example under the form of a combination of text and images, showing the list of predefined drugs.

In case where the communicating device CD or the application server AS retrieves the contextual data, these latter are transmitted to the enrichment communication device ECD that generates additional information using all received data.

In one embodiment, the user having the enrichment communication device ECD has a user profile that describes a physical limitation and that is stored in a database linked to the enrichment communication device ECD or situated in the telecommunication network NT. The enrichment communication device ECD retrieves the user profile, for example by means of an identifier of the user or the device ECD included in the voice communication, and adapts the additional information according to the physical limitation. In other embodiments, the communication device CD or the application server AS retrieves the user profile, and adapt the production of communication data to transmit to the enrichment communication device ECD.

Furthermore, the additional information can all be presented during a conversation but can be selectively chosen, for example thanks to configuration or menus, by the user depending on his needs or wishes: for example only lip movement or lip movement and sign language.

The functionality of communication enrichment can be turning on and off on per usage basis, for example thanks to configurations and menus.

The invention described here relates to a method and device for enriching a communication between two communication devices. In an embodiment, the steps of the method of the invention are determined by the instructions of a computer program incorporated in a data processing device such as the enrichment communication device DEC according to the invention. The program includes program instructions which, when said program is executed in a processor of the data processing device the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

## Claims

1. A method for enriching a voice communication between a user owning an enrichment communication device (ECD) and another user owning another communication device (CD) through a telecommunication network (TN), comprising the following steps in the enrichment communication device (ECD) receiving voice streams transmitted from the other communication device (CD):
generating additional information from an analysis of the received voice streams,
synchronizing the additional information with the received voice streams in order to provide in real time to the user a voice communication accompanied with the additional information.

2. A method according to claim 1, wherein at least some part of the additional information is generated and provided by a multimedia terminal (fVIT) linked to the enrichment communication device (ECD) under the command of this latter.

3. A method according to claim 1 or 2, at least some part of additional information is generated as a function of communication data that are produced by a server (AS) in the telecommunication network (TN) from an analysis of the voice streams and that are transmitted to the enrichment communication device (ECD).

4. A method according to claim 3, wherein the voice streams are intercepted by the server (AS) from the voice communication between the enrichment communication device (ECD) and the other communication device (CD).

5. A method according to claim 3, wherein the voice streams transmitted from the other communication device (CD) are received by the enrichment communication device (ECD) that retransmits them to the application server (AS) for the production of the communication data.

6. A method according to any of claims 1 to 5, wherein the other communication device (CD) generates communication data from an analysis of the voice streams to transmit and transmit the communication data with the voice streams to the enrichment communication device (ECD) which generates additional information from the received communication data and the received voice streams.

7. A method according to any of claims 1 to 6, wherein the additional information is readable information under the form of image data.

8. A method according to any of claims 1 to 7, wherein the additional information is audible information under the form of audio data.

9. A method according to any of claims 1 to 8, wherein the additional information is generated as a function of contextual data corresponding to at least a part of the voice streams, giving more explanation about the meaning of said part of the voice streams.

10. A method according to claim 9, wherein the contextual data are retrieved from a database by means of ontological rules applied to the concerned part of the voice streams.

11. A method according to claim 1, wherein the user having the enrichment communication device (ECD) receiving the voice streams has a user profile that describes a physical limitation and the enrichment communication device (ECD) adapts the additional information according to the physical limitation.

12. Enrichment communication device (ECD) for enriching a voice communication between a user owning the enrichment communication device (ECD) and another user owning another communication device (CD) through a telecommunication network (TN), the enrichment communication device (ECD) receiving voice streams transmitted from the other communication device (CD) and comprising:
means (ENR) for generating additional information from an analysis of the received voice streams, and
means (ENR) for synchronizing the additional information with the received voice streams in order to provide in real time to the user a voice communication accompanied with the additional information.

13. A computer program adapted to be executed in an enrichment communication device (ECD) for enriching a voice communication between a user owning an enrichment communication device (ECD) and another user owning another communication device (CD) through a telecommunication network (TN), the enrichment communication device (ECD) receiving voice streams transmitted from the other communication device (CD), said program including instructions which, when said program is executed in said enrichment communication device, execute the following steps :
generating additional information from an analysis of the received voice streams,
synchronizing the additional information with the received voice streams in order to provide in real time to the user a voice communication accompanied with the additional information.
